# EUROPÄISCHE PATENTANMELDUNG

(11) **EP 0 776 735 A1**
(43) Veröffentlichungstag der Anmeldung: **04.06.1997**
(21) Anmeldenummer: 96118726.7
(22) Anmeldetag: 22.11.1996
(51) Int. Cl.: B25C 3/00, F16B 15/04

(54) **Hülse zum Führen, Umlenken und Halten eines Nagels und Verfahren zum Herstellen einer solchen Hülse**

(30) Priorität: 28.11.1995 DE 19544184; 13.01.1996 DE 19601091
(71) Anmelder: Hoene, Jochen, 51702 Bergneustadt (DE)
(72) Erfinder: Hoene, Jochen, 51702 Bergneustadt (DE)
(74) Vertreter: Weidener, Jörg Michael, Dipl.-Ing.

(57) **Zusammenfassung**

Die Erfindung betrifft eine Hülse (1) zum Führen, Umlenken und Halten eines Nagels. (2), mit einem Hülsenkörper (3), einer Umlenköffnung (4) im Hülsenkörper (3) und einer in die Umlenköffnung (4) übergehenden Führung (5), sowie ein Verfahren zur Herstellung einer derartigen Hülse (1). Um das Herstellungsverfahren zu vereinfachen und die Herstellungskosten der Hülse (1) zu verringern, ist erfindungsgemäß vorgesehen, daß der Hülsenkörper (3) aus einem gerollten Flachmaterialabschnitt, vorzugsweise aus einem gerollten Blechstreifen, besteht.

## Beschreibung

Die Erfindung betrifft eine Hülse zum Führen, Umlenken und Halten eines Nagels, nach dem Oberbegriff des Anspruchs 1 sowie ein Verfahren zum Herstellen einer solchen Hülse nach dem Oberbegriff des Anspruchs 10.

Eine Hülse zum Führen, Umlenken und Halten eines Nagels der eingangs genannten Art ist bereits aus der Praxis bekannt. Derartige Hülsen werden in Verbindung mit Nägeln insbesondere im Baugewerbe zur Befestigung verwendet. Dabei dienen derartige Nagel-Hülsen-Verbindungen vor allem als Ersatz für gedübelte Schraubverbindungen, gerade bei "weichen" Bausteinmaterialien, die ein Einschlagen von Nägeln erlauben. Für eine solche Befestigung mit einem Nagel und einer vorgenannten Hülse wird zunächst ein Loch in den jeweiligen Stein gebohrt und die Hülse dann in das Loch eingeschoben. Sodann wird ein Nagel in die Hülse eingeschlagen. Beim Einschlagen des Nagels wird dieser über die Führung und die Umlenköffnung aus dem Hülsenkörper der Hülse seitlich herausgeführt und gleichzeitig bogenförmig abgebogen. Der aus dem Hülsenkörper ragende, abgebogene Teil des Nagels gräbt sich dabei in den Stein ein. Hierdurch ergibt sich eine sichere Befestigung, die sich im Vergleich zu einer Schraubbefestigung über einen Dübel erheblich schneller herstellen läßt.

Die bekannten Hülsen zum Führen, Umlenken und Halten eines Nagels werden aus einem Rohr hergestellt. Hierzu werden von dem Rohr passende Rohrstücke abgeschnitten. In jedes Rohrstück wird dann zur Herstellung der Umlenköffnung und der Führung eine Zunge ausgestanzt. Außerdem wird zur Herstellung eines abgebördelten Hülsenkopfes der Rohrabschnitt an seinem einen Ende mit einem separaten Werkzeug aufgeweitet. An ihrem anderen Ende ist die Hülse üblicherweise mit einem angefasten Hülsenende versehen. Die Anfasung muß in einem weiteren separaten Herstellungsvorgang drehend hergestellt werden. Der Nachteil der bekannten Hülse besteht darin, daß das Rohrmaterial vergleichsweise teuer ist und die gesamte Herstellung - Stanzung zur Herstellung der Umlenköffnung und der Führung, Aufweiten des eines Hülsenendes zur Herstellung des abgebördelten Hülsenkopfes und Abdrehen des anderen Hülsenendes zur Herstellung einer Anfasung - vergleichsweise teuer ist.

Weiterhin ist aus der US - A - 3,945,414 eine Einrichtung zum Führen, Umlenken und Halten eines Nagels bekannt. Hierbei handelt es sich um ein Handgerät, das im Gegensatz zu der vorgenannten Hülse nicht eingeschlagen wird. Dieses Gerät setzt sich im übrigen aus einer Vielzahl von Bauteilen zusammen.

Die Erfindung geht nun einen neuen Weg und vermeidet die vorgenannten Nachteile. Erfindungsgemäß ist bei der eingangs genannten Hülse zum Führen, Umlenken und Halten eines Nagels vorgesehen, daß der Hülsenkörper aus einem gerollten Flachmaterialabschnitt besteht bzw. aus einem solchen hergestellt wird. Im Gegensatz zum Stand der Technik wird nun also nicht mehr ein Rohrmaterial als Ausgangsmaterial für die Hülse verwendet, sondern Flachmaterial, das zur Herstellung des Hülsenkörpers gerollt wird. Ein derartiger Rollwerkstoff ist erheblich kostengünstiger als ein Rohrmaterial. Als Rollwerkstoff eignet sich natürlich insbesondere ein Blechstreifen, bei dem es sich beispielsweise um den Werkstoff "C 67 weich" handeln könnte. Natürlich kann aber auch ein anderes Material, beispielsweise Kunststoff verwendet werden. Der Erfindung liegt als Ausgangspunkt die Überlegung zugrunde, daß die bekannte Hülse hinsichtlich ihres Ausgangsmaterials und wegen der verschiedenen unterschiedlichen Arbeitsvorgänge vergleichsweise teuer ist. Gegenüber dem Rohrmaterial ist Flachmaterial, das beispielsweise zur Herstellung der Hülse von einem Coil abgezogen, abgeschnitten und anschließend gerollt werden kann, nicht nur erheblich kostengünstiger, es lassen sich auch die einzelnen Arbeitsvorgänge zur Herstellung des Hülsenkopfes und des angefasten Hülsenendes erheblich vereinfachen, nämlich ebenfalls durch Rollvorgänge realisieren. In jedem Falle werden durch die erfindungsgemäß gerollte Hülse oder Buchse die Gesamtherstellungskosten und der gesamte Arbeitsaufwand erheblich reduziert.

Am einfachsten und kostengünstigsten läßt sich der Hülsenkörper dadurch herstellen, daß er aus einem ursprünglich rechtwinkligen Flachmaterialabschnitt unter Bildung einer geschlitzten Buchse besteht, wobei der Schlitz etwa in Längsrichtung des Hülsenkörpers verläuft. Natürlich versteht es sich, daß der Hülsenkörper auch derart gerollt sein kann, daß der Schlitz spiralartig verläuft.

Darüber hinaus gestattet es die Verwendung von gerolltem Flachmaterial ohne weiteres, Hülsenkörper mit unterschiedlichen Durchmessern herzustellen. Die unterschiedlichen Durchmesser des Hülsenkörpers können bei Verwendung eines einzigen Flachmaterialabschnitt dadurch hergestellt werden, daß sich die Längsränder des Hülsenkörpers überlappen (kleinerer Durchmesser), aneinanderstoßen (mittlerer Durchmesser) oder voneinander beabstandet sind (größerer Durchmesser). Demgegenüber ist es beim Stand der Technik erforderlich, für jeden bestimmten Nageldurchmesser einen bestimmten Rohrtypen zur Verfügung zu stellen.

Um dem Nagel beim Einschlagen eine bessere Führung zu geben, ist im Hülsenkörper wenigstens eine vorzugsweise umlaufende Einschnürung vorgesehen. Die Einschnürung ist dabei zweckmäßigerweise in Einführ- oder Einschlagrichtung des Nagels angeschrägt, wobei die Höhe der Einschnürung derart gewählt ist, daß die Nagelspitze beim Einführen nicht an einer vorderen freien Randkante der Führung, die in den Hülsenkörper ragt, anschlägt. Die Einschnürung stellt also sicher, daß die Nagelspitze in jedem Falle auf die Führung geführt wird, so daß das gewünschte Umlenken und Austreten des Nagels aus der Umlenköffnung in jedem Falle sichergestellt ist.

Bei einer bevorzugten Ausführungsform der vorliegenden Erfindung ist der lichte Innendurchmesser im Bereich der Einschnürung kleiner als der Außendurchmesser des Nagels. Hierdurch wird sichergestellt, daß eine Klemmwirkung auf den Nagel ausgeübt wird, was die Vormontage und auch die Handhabung der erfindungsgemäßen Hülse sehr erleichtert. Hierdurch ist es nämlich möglich sicherzustellen, daß auch bei vertikaler Anordnung der Hülse ein eingesteckter Nagel nicht aus der Hülse herausfällt. Wenn außerdem zwei in Längsrichtung voneinander beabstandete Einschnürungen vorgesehen sind, wird hierdurch nicht nur die Klemmwirkung verbessert, sondern es wird auch eine hervorragende Führung, d. h. eine genau vorgegebene, geführte Anordnung des Nagels in der Hülse sichergestellt.

Außerdem ist es von besonderem Vorteil, wenn die Hülse und der Nagel eine vormontierte Baueinheit bilden. Dies bedeutet, daß der Nagel bereits in die Hülse eingesteckt, also vormontiert vom Hersteller geliefert wird. Hierdurch wird zunächst einmal sichergestellt, daß immer der "richtige" Nagel verwendet wird und außerdem, daß grundsätzlich für jede Hülse ein Nagel vorhanden ist. Auf Baustellen kommt es nämlich häufig vor, daß zwar Hülsen vorhanden sind, jedoch keine Nägel und später vergessen wird, in die eingebrachten Hülsen noch einen Nagel einzuschlagen.

Obwohl die Einschnürung auch über ein weiteres separates Bauteil realisiert werden könnte, das nach dem Rollen in den Hülsenkörper eingebracht wird, bietet es sich an, wenn die Einschnürung vor oder bei dem Rollen des Hülsenkörpers in den Flachmaterialabschnitt eingerollt wird. Dies läßt sich schnell, einfach und kostengünstig realisieren.

Darüber hinaus läßt sich vor, bei oder nach dem Rollen des Hülsenkörpers auch ein abgebördelter Hülsenkopf und/oder ein angefastes Hülsenende am Flachmaterialabschnitt bzw. am Hülsenkörper ausbilden und zwar ebenfalls durch entsprechende Rollvorgänge. Weitere Werkzeuge - wie beim Stand der Technik - sind hierbei nicht erforderlich.

Schließlich läßt sich nach Herstellung des Hülsenkörpers in diesen ohne weiteres die Führung unter Bildung der Umlenköffnung einbringen und zwar insbesondere dadurch, daß aus dem Hülsenkörper eine Zunge herausgestanzt und in den Hülsenkörper hereingedrückt wird.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von Ihrer Zusammenfassung in den Patentansprüchen oder deren Rückbeziehung. Es zeigt
- Fig. 1: eine perspektivische Ansicht einer erfindungsgemäßen Hülse,
- Fig. 2: eine Seitensicht auf die Hülse aus Fig. 1,
- Fig. 3: eine Querschnittsansicht der erfindungsgemäßen Hülse,
- Fig. 4: eine Ansicht einer erfindungsgemäßen Hülse mit einem eingeschlagenen Nagel und
- Fig. 5: eine der Fig. 3 entsprechende Ansicht einer anderen Ausführungsform einer erfindungsgemäßen Hülse mit einem vormontierten Nagel.

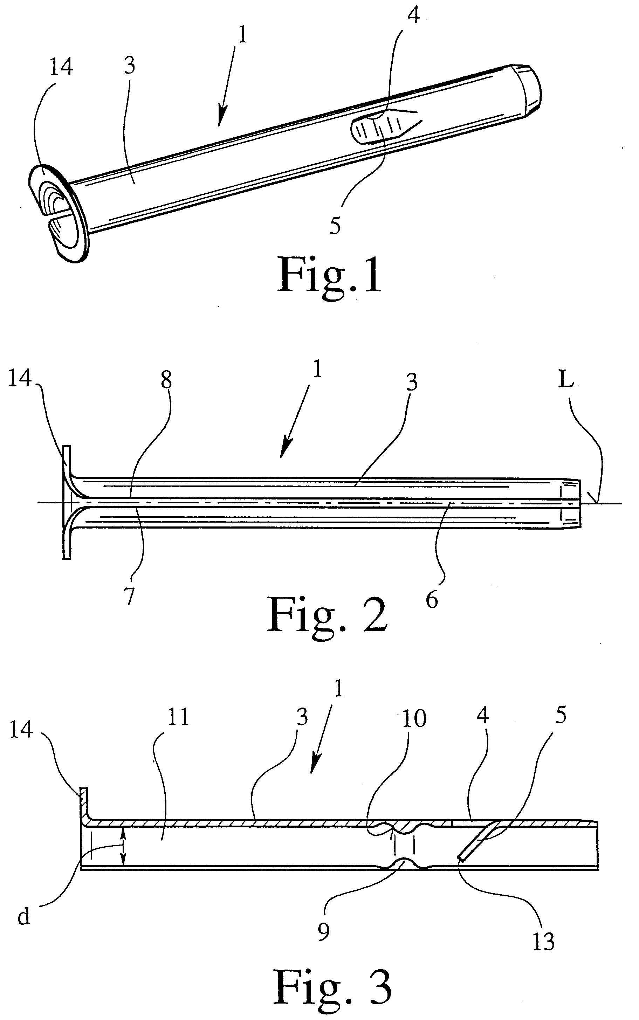

In den Fig. 1 bis 5 ist eine Hülse 1 zum Führen, Umlenken und Halten eines Nagels 2 dargestellt. Die Hülse 1 weist einen Hülsenkörper 3 auf, der eine im wesentlichen zylindrische Form haben kann. Dies muß aber nicht unbedingt der Fall sein, worauf noch näher eingegangen wird. Im Hülsenkörper 3 befindet sich eine Umlenköffnung 4. Weiterhin weist die Hülse 1 eine Führung 5 auf, die vom Inneren des Hülsenkörpers 3 in die Umlenköffnung 4 übergeht und dazu dient, einen Nagel 2 beim Einschlagen aus dem Hülsenkörper 3 herauszuführen und dabei abzubiegen.

Wesentlich ist nun, daß die gesamte Hülse 1 aus einem im einzelnen nicht dargestellten gerollten Flachmaterialabschnitt besteht. Vorliegend handelt es sich bei dem Flachmaterialabschnitt um einen gerollten Blechstreifen aus dem Werkstoff "C 67 weich" mit einer Materialstärke von 1,1 mm. Dieser Rollwerkstoff ist erheblich günstiger als ein rohrförmiges Ausgangsmaterial, das zur Herstellung einer bekannten Hülse verwendet wird.

Vorliegend ist der Hülsenkörper 3 zu einer geschlitzten Buchse gerollt, wobei der Schlitz 6 in Längsrichtung L des Hülsenkörpers 3 bzw. der Hülse 1 verläuft. Bei der in Fig. 2 dargestellten Ausführungsforrn sind die Längsränder 7, 8 des Hülsenkörpers 3 über einen geringen Abstand voneinander beabstandet. Zur Vergrößerung des Innendurchmessers d des Hülsenkörpers 3 könnte der Abstand der beiden Längsränder 7, 8 auch vergrößert werden. Zur Verkleinerung des Innendurchmessers d könnten die Längsränder 7, 8 auch aneinanderstoßen oder aber sich überlappen, so daß der Hülsenkörper keine zylindrische Form mehr hätte.

Im Hülsenkörper 3 befindet sich in Einführ- oder Einschlagrichtung des Nagels 2 vor der Führung 5 eine umlaufende Einschnürung 9. Die Einschnürung 9 ist in Einführrichtung des Nagels 2 mit einer Auflaufschräge 10 versehen. Durch die Einschnürung verringert sich der Innendurchmesser d der Einführöffnung 11 im Hülsenkörper 3. Die Auflaufschräge 10 verhindert dabei, daß die Nagelspitze 12 beim Einschlagen des Nagels 2 an der Einschnürung 9 unbeabsichtigter Weise anschlägt.

Die Führung 5 ist im dargestellten Ausführungsbeispiel als in den Hülsenkörper 3 unter Bildung der Umlenköffnung 4 hineingedrückte Zunge ausgebildet. Die Zunge ist an ihrem einen Ende mit dem Hülsenkörper 3 fest verbunden, während das andere, freie Ende der Zunge mit seiner vorderen Randkante 13 in den Hülsenkörper 3, d. h. also in die Einführöffnung 11 hineinragt und zwar entgegengesetzt zur Einführrichtung. Die Höhe der Einschnürung 9 ist nun derart gewählt, daß die Nagelspitze 12 beim Einführen und Einschlagen nicht an der vorderen freien Randkante 13 der als Zunge ausgebildeten Führung 5 anschlägt, was im schlimmsten Falle dazu führen. könnte, daß diese in Richtung auf die Umlenköffnung 4 gedrückt wird, wodurch der Nagel 2 durch den Hülsenkörper 3 insgesamt hindurchgedrückt werden könnte und dann nicht abgebogen wird. Durch geeignete Wahl der Höhe der Einschnürung 9 läßt sich eine derartige Fehlfunktion sicher vermeiden. Gleiches läßt sich natürlich auch dadurch und ohne Realisierung der Einschnürung 9 erzielen, daß die Zunge weit genug in den Hülsenkörper 3 bzw. die Einführöffnung 11 hineingedrückt wird.

Endseitig weist der Hülsenkörper 3 an seinem einschlagseitigen Ende einen abgebördelten Hülsenkopf 14 und an seinem anderen Ende ein angefastes Hülsenende 15 auf. Charakteristisch für die erfindungsgemäße Hülse 1 ist, daß der abgebördelte Hülsenkopf 14 nicht umlaufend ist, sondern sich nur über einen Teilbereich des Umfanges des Hülsenkörpers 3 erstreckt. Dies ergibt sich aus der Art und Weise der Herstellung der Hülse 1 im Rollvorgang. Der nur teilweise umlaufende, abgebördelte Hülsenkopf 14 reicht aber aus, seine Funktion bzw. Aufgabe - Verhinderung des zu tiefen Einschiebens der Hülse 1 in das Bohrloch - sicher zu erfüllen.

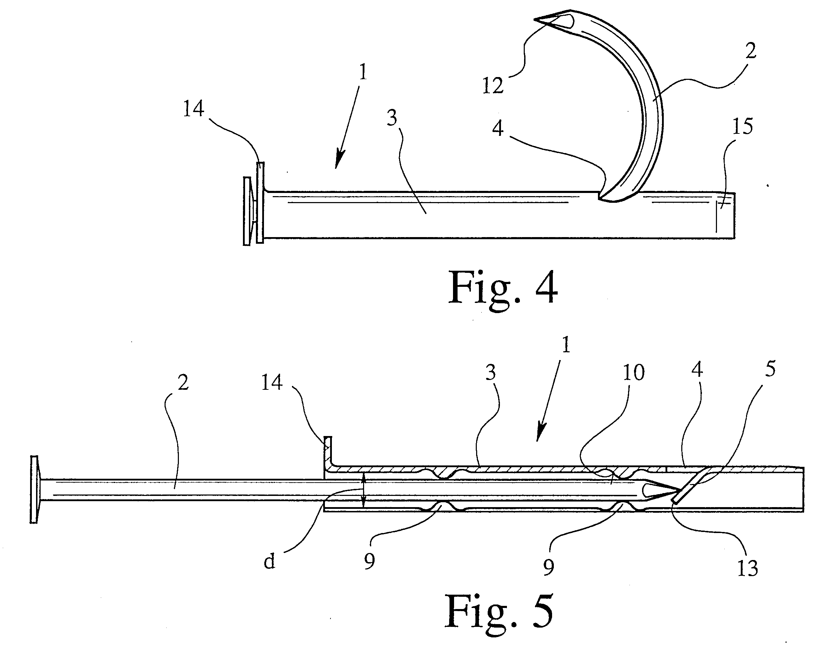

In Fig. 5 ist eine weitere Ausführungsform der Hülse 1 dargestellt. Die in Fig. 5 dargestellte Hülse 1 unterscheidet sich von der in Fig. 3 dargestellten dadurch, daß neben der der Führung 5 vorgeschalteten Einschnürung 9 eine weitere von dieser beabstandete Einschnürung 9 vorgesehen ist. Die beiden in Längsrichtung L voneinander beabstandeten Einschnürungen 9 sorgen für eine genau vorgegebene Führung des Nagels 2 in der Hülse 1. Die Ausbildung der beiden Einschnürungen 9 ist dabei auf den Durchmesser des Nagels 2 derart abgestimmt, daß zumindest eine der Einschnürungen 9 eine leichte Klemmwirkung auf den Nagel 2 ausübt. Konstruktiv ist dies dadurch realisiert, daß der lichte Innendurchmesser im Bereich der Einschnürungen 9 kleiner ist als der Außendurchmesser des Nagels 2.

Bei der in Fig. 5 dargestellten Ausführungsform handelt es sich im übrigen um eine vormontierte Baueinheit zwischen der Hülse 1 und dem Nagel 2, so daß eine Abstimmung der Einschnürungen 9 auf den Nagel zur Erzielung einer Klemmwirkung herstellseitig erfolgen kann und damit ohne weiteres möglich ist.

### Eine erfindungsgemäße Hülse 1 wird nun wie folgt hergestellt:

Zunächst wird ein Flachmaterialabschnitt, beispielsweise aus Blech, benötigt. Dieser wird beispielsweise von einem Flachmaterial abgeschnitten, das von einem Coil abgezogen wird. Der Flachmaterialabschnitt hat dann etwa die Form eines Rechtecks. Vor dem Rollen des Flachmaterialabschnitts zu einer geschlitzten Hülse 1 oder Buchse wird eine umlaufende Einschnürung 9 oder ein Radius nach innen angerollt oder es können auch als Einprägungen ausgebildete Einschnürungen 9 eingebracht, beispielsweise eingedrückt werden. Daraufhin wird der Flachmaterialabschnitt zur Hülse 1 gerollt. Sodann wird eine Abbördelung zur Herstellung des Hülsenkopfes 14 sowie eine Anfasung am gegenüberliegenden Ende zur Herstellung des Hülsenendes 15 angerollt. Gegebenenfalls ist anschließend noch eine Bearbeitung der Längsränder 7, 8 durch ein leichtes Abschleifen erforderlich. Schließlich wird noch die Führung 5 durch Ausstanzen der Zunge und Hineindrücken in die Einführöffnung 11 hergestellt.

## Patentansprüche

1. Hülse (1) zum Führen, Umlenken und Halten eines Nagels (2), mit einem Hülsenkörper (3), einer Umlenköffnung (4) im Hülsenkörper (3) und einer in die Umlenköffnung (4) übergehenden Führung (5), **dadurch gekennzeichnet,** daß der Hülsenkörper (3) aus einem gerollten Flachmaterialabschnitt, vorzugsweise aus einem gerollten Blechstreifen, besteht.

2. Hülse nach Anspruch 1, dadurch gekennzeichnet, daß der Hülsenkörper (3) aus einem rechtwinkligen Flachmaterialabschnitt unter Bildung einer Buchse gerollt ist, wobei die Längsränder (7, 8) des Hülsenkörpers (3) einander überlappen, aneinanderstoßen oder voneinander beabstandet sind.

3. Hülse nach einem der vorhergehenden Ansprüche, dadurch gekennzeichnet, daß die Längsränder (7, 8) des Hülsenkörpers (3) in etwa in Längsrichtung (L) des Hülsenkörpers (3) verlaufen.

4. Hülse nach einem der vorhergehenden Ansprüche, dadurch gekennzeichnet, daß die Führung (5) als in den Hülsenkörper (3) unter Bildung der Umlenköffnung (4) hineingedrückte Zunge ausgebildet ist.

5. Hülse nach einem der vorhergehenden Ansprüche, dadurch gekennzeichnet, daß im Hülsenkörper (3) wenigstens eine vorzugsweise umlaufende Einschnürung (9) vorgesehen ist.

6. Hülse nach einem der vorhergehenden Ansprüche, dadurch gekennzeichnet, daß die Einschnürung (9) in Einführrichtung des Nagels (2) angeschrägt ist und daß, vorzugsweise, die Höhe der Einschnürung (9) derart gewählt ist, daß die Nagelspitze (12) beim Einführen bzw. Einschlagen nicht an der vorderen, freien Randkante (13) der Führung (5) anschlägt.

7. Hülse nach einem der vorhergehenden Ansprüche, dadurch gekennzeichnet, daß der lichte Innendurchmesser im Bereich der Einschnürung (9) kleiner ist als der Aussendurchmesser des Nagels (2) und daß, vorzugsweise, zwei in Längsrichtung (L) voneinander beabstandete Einschnürungen (9) vorgesehen sind.

8. Hülse nach einem der vorhergehenden Ansprüche, dadurch gekennzeichnet, daß die Hülse (1) und der Nagel (2) eine vormontierte Baueinheit bilden.

9. Hülse nach einem der vorhergehenden Ansprüche, dadurch gekennzeichnet, daß ein abgebördelter Hülsenkopf (15) und/oder ein angefastes Hülsenende (15) vorgesehen sind und daß, vorzugsweise, der Hülsenkopf (14) und/oder das Hülsenende (15) gerollt sind.

10. Verfahren zum Herstellen einer Hülse (1) zum Führen, Umlenken und Halten eines Nagels (2), mit einem Hülsenkörper (3), wobei die Hülse (1) eine Umlenköffnung (4) im Hülsenkörper (3) und eine in die Umlenköffnung (4) übergehende Führung (5) aufweist, **dadurch gekennzeichnet**, daß der Hülsenkörper (3) aus einem Flachmaterialabschnitt, vorzugsweise einem Blechstreifen, gerollt wird.

11. Verfahren nach Anspruch 10, dadurch gekennzeichnet, daß der Flachmaterialabschnitt von einem von einem Coil abgezogenen Flachmaterial abgeschnitten wird.

12. Verfahren nach einem der vorhergehenden Ansprüche, dadurch gekennzeichnet, daß in den Flachmaterialabschnitt vor oder bei dem Rollen des Hülsenkörpers (3) eine vorzugsweise umlaufende Einschnürung (9) od. dgl. eingebracht, vorzugsweise eingerollt wird.

13. Verfahren nach einem der vorhergehenden Ansprüche, dadurch gekennzeichnet, daß vor, bei oder nach dem Rollen des Hülsenkörpers (3) ein abgebördelter Hülsenkopf (14) und/oder ein angefastes Hülsenende (15) gerollt wird.

14. Verfahren nach einem der vorhergehenden Ansprüche, dadurch gekennzeichnet, daß nach dem Rollen des Hülsenkörpers (3) die als Zunge ausgebildete Führung (5) unter Bildung der Umlenköffnung (4) in den Hülsenkörper (3) hineingedrückt wird.
